Europäisches Patentamt

European Patent Office

Office européen des brevets

(11) Veröffentlichungsnummer : **0 056 849**
**B1**

# (12) EUROPÄISCHE PATENTSCHRIFT

(45) Veröffentlichungstag der Patentschrift :
25.07.84

(51) Int. Cl.³ : **B 60 J 5/04**

(21) Anmeldenummer : **81109454.9**

(22) Anmeldetag : **31.10.81**

(54) **Tür, insbesondere für ein Kraftfahrzeug.**

(30) Priorität : **24.01.81 DE 3102328**

(43) Veröffentlichungstag der Anmeldung :
**04.08.82 Patentblatt 82/31**

(45) Bekanntmachung des Hinweises auf die Patenterteilung : **25.07.84 Patentblatt 84/30**

(84) Benannte Vertragsstaaten :
**FR GB IT**

(56) Entgegenhaltungen :
**DE-A- 1 480 089**
**FR-A- 2 198 852**
**FR-A- 2 467 722**
**US-A- 3 868 141**
**AUTOMOBILETECHNISCHE ZEITSCHRIFT, Band 73,**
**Nr. 12, Dezember 1971, Seite 474, Bild 5 "Versteifung**
**der Türen in der verstärkten Zelle des ESF-05; in**
**Verbindung mit Zapfenschössern erlauben sie das**
**Öffnen nach 80 km/h-Aufprali"**

(73) Patentinhaber : **Messerschmitt-Bölkow-Blohm GmbH**
**Robert-Koch-Strasse**
**D-8012 Ottobrunn (DE)**

(72) Erfinder : **Engelsberger, Ernst, Ing. grad.**
**Preysingstrasse 34**
**D-8019 Glonn (DE)**
Erfinder : **Schulz, Ralf-Thilo, Dipl.-Ing.**
**Ödenstockacher Strasse 3**
**D-8011 Putzbrunn (DE)**
Erfinder : **Drachenberg, Franz, Ing. grad.**
**Brunnenstrasse 61**
**D-8011 Baldham (DE)**

**Beschreibung**

Die Erfindung betrifft eine Tür der im Oberbegriff des Anspruchs 1 beschriebenen Gattung.

Eine derartige Tür, beispielsweise gemäß der DE-AS 14 80 089, hat u. a. den Vorteil, daß das Türinnen- und Türaußenteil aus Kunststoff als reine nichttragende Verkleidungteile ausgebildet werden können. Das bringt eine erhebliche Gewichtseinsparung, führt aber zwangsläufig auch zu einer Minderung der Türstärke. Daher wird diese Tür nicht ohne weiteres die Forderung nach größtmöglicher Minderung des bei einem seitlichen Aufprall durch Verformung entstehenden (Personen-) Sicherheitsrisikos erfüllen können.

Der Erfindung liegt daher die Aufgabe zugrunde, den Verformungswiderstand der eingangs genannten Tür zu erhöhen, ohne auf den Vorteil einer Kunststoff- und somit Leichtbauweise verzichten zu müssen.

Diese Aufgabe ist gemäß dem Kennzeichen des Anspruchs 1 gelöst, wonach zum einen durch die gewählte (schwenk-)gelenkige Verbindung mit den Türscharnieren und dem Türschloß die beiden Träger unter Belastung bis zum Bruch weitgehend verformungsfrei gehalten werden und zum anderen bei deren Bruch noch durch das Seil erreicht wird, daß in dessen Bereich das Türmittelteil die Funktion eines energieabsorbierenden Stoßfängers erfüllt. Dabei läßt sich durch Verwendung eines Hohlprofils für den horizontalen Träger gemäß der im Anspruch 2 gekennzeichneten Ausgestaltung der Erfindung eine kompakte Bauweise beibehalten.

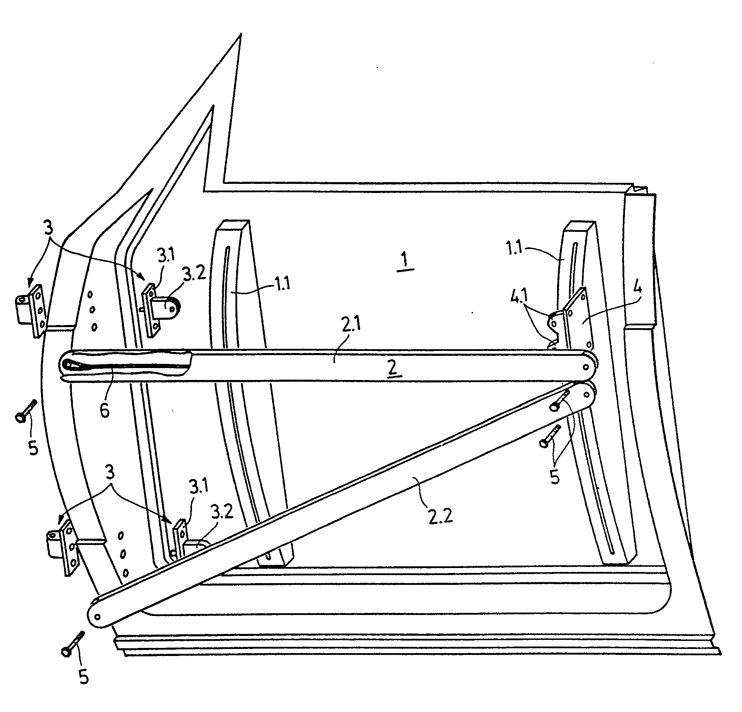

Nachfolgend wird ein Ausführungsbeispiel der Erfindung und ihrer in den Unteransprüchen gekennzeichneten Weiterbildungen erläutert, denen u. a. Bedeutung im Rahmen der Forderung nach einer faserverbundwerkstoffgerechten Türstruktur zukommt. Hierbei zeigt die Zeichnung in Explosionsdarstellung einer vorderen Seitentür eines Personenkraftfahrzeugs bloß ein Türinnenteil 1 und ein Türmittelteil 2, auf welchem ein Türaußenteil beispielsweise in Form einer bloßen Metallhaut sitzen kann. Zugleich trägt das Türmittelteil 2 auch das Türinnenteil 1, welches als Innenverkleidung gestaltet ist und zusätzlich mit Laufschienen 1.1 für Scheiben und dgl. versehen sein kann ; das Türinnenteil kann ein Kunststoffwarmformteil sein, erforderlichenfalls mit einer (Glas-)Fasergewebeverstärkung.

Schließlich (als tragendes Bauteil der vorgenannten Türteile) wird das Türmittelteil 2 aus zwei etwa in V-förmiger Anordnung zwischen Türscharnieren 3 und einem Türschloß bzw. dessen Basisplatte 4 sich erstreckenden Trägern 2.1, 2.2 gebildet, welche aus Festigkeits- bzw. Steifigkeitsgründen in Form von Rechteckhohlprofilen aus faserverstärktem Kunststoff mit einer Faserorientierung in Profillängsrichtung bestehen. Diese Träger 2.1, 2.2 sind mit ihren — erforderlichenfalls mit einem Lochlaibungsgewebelaminat verstärkten — Enden an den am Türinnenteil 1 sitzenden Basisplatten 3.1 und 4 der Türscharniere 3 bzw. des Türschlosses über je einen Bolzen 5 angelenkt. Erst hierdurch können die (z. B. stranggezogenen) Träger 2.1, 2.2 als unidirektionalfaserverstärkte Kunststoffprofile hoher spezifischer Steifigkeit und Festigkeit voll wirksam werden : Die gewählten Gelenkverbindungen über je eine in das betreffende Trägerende eingeführte Lasche 3.2 bzw. 4.1 mit Bolzen 5 macht die Träger 2.1, 2.2 zu derart zug- und druckbelastbaren Streben, daß sie sich unter Belastung beim Aufprall (sog. Crash) eines Gegenstandes auf die Tür erst vor dem Bruch durchbiegen können. Für diesen Fall « Bruch der Träger » ist schließlich durch ein irreversibel dehnbares Seil 6 vorzugsweise aus Polyamidfaserstoff zwischen den für dessen Schlaufen geschlitzten (oberen) Laschen 3.2, 4.1 im obenliegenden horizontalen Träger 2.1 sichergestellt, daß die Tür im Bereich dieses Trägers als Stoßfänger wirksam wird. Denn bei dessen Bruch kommt es zur Stoßenergieabsorption durch Längung des im Träger 2.1 zwischen dessen beiden Enden an den zugeordneten Bolzen 5 angreifenden Seils 6 durch den aufprallenden Gegenstand ; diese Stoßfängerfunktion kann erforderlichenfalls durch ein entsprechendes Seil im zweiten Träger 2.2 ausgeweitet werden.

Folglich ist die Tür ein wesentlicher Beitrag im Bestreben nach leichteren Karosseriebauteilen ohne größeres Sicherheitsrisiko für die Insassen des Kraftfahrzeugs.

**Ansprüche**

1. Zusammengesetzte Tür, insbesondere für ein Kraftfahrzeug, bei der wenigstens zwei etwa in Y- oder V-förmiger Anordnung zwischen Türscharnieren (3) und einem Türschloß sich erstreckende Träger (2.1, 2.2), von denen einer sich etwa in Horizontallage zwischen dem Türschloß und oberen Türscharnier befindet, als Türmittelteil (2) ein Türinnen- (1) und ein Türaußenteil tragen, dadurch gekennzeichnet, daß die Enden der beiden Träger (2.1, 2.2) an den am Türinnenteil (1) sitzenden Türscharnieren (3) bzw. Türschloß (Basisplatte 4) über je einen Bolzen (5) angelenkt sind und daß sich zumindest längs des horizontalen Trägers (2.1) ein an den seinen beiden Enden zugeordneten Bolzen (5) angreifendes, irreversibel dehnbares Seil (6) erstreckt.

2. Tür nach Anspruch 1, dadurch gekennzeichnet, daß wenigstens der horizontale Träger (2.1) die Form eines Hohlprofils hat, in welchem sich das Seil (6) erstreckt.

3. Tür nach Anspruch 2, deren Träger aus faserverstärktem Kunststoff bestehen, gekennzeichnet durch Rechteckhohlprofile mit einer Faserorientierung in Profillängsrichtung.

4. Tür nach Anspruch 1, gekennzeichnet durch ein Seil (6) aus Kunststoff, vorzugsweise Polyamidfaserstoff.

## Claims

1. An assembled door, more particularly for a motor vehicle, in which at least two supports (2.1, 2.2), which extend approximately in Y- or V-shaped arrangement between door hinges (3) and a door lock and one of which is disposed approximately in horizontal disposition between the door lock and the upper door hinge, as door central part (2) carry a door inner part and a door outer part, characterised in that the ends of the two supports (2.1, 2.2) are each hinged by way of a pin (5) respectively to the door hinges (3) or door lock (base plate 4) which are seated on the door inner part (1) and in that extending at least along the horizontal support (2.1) is an irreversibly extensible cable (6) which acts on the bolts (7) associated with its two ends.

2. A door according to claim 1, characterised in that at least the horizontal support (2.1) is in the form of a hollow section in which the rope (6) extends.

3. A door according to claim 2, the supports of which consist of fibre-reinforced plastics material, characterised by rectangular hollow sections with a fibre orientation in the longitudinal direction of the section.

4. A door according to claim 1, characterised by a cable (6) made from plastics material, preferably polyamide fibre material.

## Revendications

1. Porte composée, en particulier pour un véhicule automobile, dans laquelle au moins deux supports (2.1, 2.2), s'étendant sensiblement en forme de Y ou de V entre des charnières (3) et une serrure de la porte et dont l'un se trouve à peu près en position horizontale entre la serrure et la charnière supérieure de la porte, soutiennent, en tant que partie médiane (2), une partie intérieure (1) et une partie extérieure de la porte, caractérisée par le fait que les extrémités des deux supports (2.1, 2.2) s'articulent respectivement par l'intermédiaire d'un boulon (5) sur les charnières (3) fixées à la partie intérieure (1) et sur la serrure de la porte (plaque de base 4) et qu'un câble (6) extensible de façon irréversible et agissant sur les boulons (5) associés à ses deux extrémités, s'étend au moins le long du support horizontal (2.1).

2. Porte selon la revendication 1, caractérisée par le fait qu'au moins le support horizontal (2.1) a la forme d'un profilé creux dans lequel s'étend le câble (6).

3. Porte selon la revendication 2, dont les supports sont réalisés en matière plastique renforcée de fibres, caractérisée par des profils rectangulaires creux avec une orientation des fibres dans le sens longitudinal du profil.

4. Porte selon la revendication 1, caractérisée par un câble (6) en matière plastique, de préférence en matière fibreuse polyamide.